# EUROPEAN PATENT SPECIFICATION

(11) **EP 3 416 532 B1**
(45) Date of publication and mention of the grant of the patent: **25.03.2020**
(21) Application number: 17716600.6
(22) Date of filing: 15.02.2017
(51) Int. Cl.: A47J 31/56

(54) **CONTROL DEVICE FOR A BOILER**
STEUERUNGSVORRICHTUNG FÜR EINEN KESSEL
DISPOSITIF DE COMMANDE POUR CHAUDIÈRE

(30) Priority: 17.02.2016 IT UB20160811
(43) Date of publication of application: 26.12.2018
(73) Proprietor: I.R.C.A. S.p.a. Industria Resistenze Corazzate e Affini, 31029 Vittorio Veneto (IT)
(72) Inventor: ZOPPAS, Federico, 31100 Treviso (IT); CAPRARO, Duilio, 31015 Conegliano (IT); CEOTTA, Christian, 31040 Nervesa Della Battaglia (IT); DE NONI, Paolo Antonio, 31015 Conegliano (IT)
(74) Representative: Celona, Antonio
(86) International application number: PCT/IB2017/050842
(87) International publication number: WO 2017/141171

(56) References cited:
- CN-U- 202 836 671
- CN-U- 203 011 468
- DE-A1-102004 004 571

## Description

### Field of application

The present invention relates to a control device for a boiler, e.g. for a boiler of a dispenser of hot drinks such as coffee machines. In particular, the present invention relates to a control device with a probe of the water level of the boiler.

### Background Art

Dispensers of hot drinks, such as electric coffee machines, include a boiler containing the water to be heated for preparing coffee. During the operation of the dispenser, the water is brought to high temperatures, to about 100°C, by means of heating means such as electrical resistors. A condition to be necessarily be avoided in order to preserve the integrity of the dispenser is dry-run, i.e. the resistor generating heat when the water level in the boiler is not sufficient. To avoid dry-run, control devices are generally used to act as probes of the water level in the boiler. In order to ensure the electric insulation between the boiler and the level probe, the latter is coated by an insulator, generally made of plastic, which is restrained to appropriate means fastened to the boiler.

CN-U-203011468 discloses a water-level detection device which is used for water-level detection of boilers or water tanks. This water-level detection device comprises a fixing bolt, probes, anti-corrosion sealing insulating sleeves and a warning device. A plurality of through-holes are arranged on fixing bolts. The anti-corrosion sealing insulating sleeves and probes and are fixed together and are inside the through-holes of fixing bolts.

To date, the systems to lock the insulator to such means are not satisfactory, since after a use of a certain duration they no longer ensure an adequate sealing for the proper operation of the dispenser, resulting in the leakage of water, in liquid or gaseous phase, from the boiler. Some known locking systems determine a plastic deformation of the insulator, of a greater extent as the inner pressure of the boiler increases, further worsening the sealing ability. Furthermore, the known systems are relatively complex and expensive with respect to mass production needs.

Therefore, the need to resolve such problems is felt.

### Summary of the invention

It is an object of the present invention to provide a water level control device in the boiler for electric dispensers of hot drinks, in particular a device comprising a level probe, which ensures an optimal sealing, as much as possible superior with respect to the prior art.

It is another object of the present invention to provide such a type of control device which ensures the hermetic sealing even at a high temperatures and when the inner pressure of the boiler increases.

It is another object of the present invention to provide such a type of control device which can be manufactured in a simpler and more cost-effective manner with respect to the prior art.

The present invention achieves these and other objects which will become apparent in light of the present description, providing a control device for controlling a water level in a boiler, which in accordance with claim 1 comprises
- a fastening element apt to fasten the control device to a boiler wall, with a through hole defining an axis X,
- an insulator inserted into the hole of the fastening element,
- a sealing ring,
- a level probe having a portion coated by the insulator and one end intended to be within the boiler when the control device is fastened to the boiler wall,
wherein there is provided a first abutment area which is circumferential and internal to the fastening element,
wherein the insulator has a circumferential groove where the sealing ring is accommodated, and wherein the sealing ring abuts against said first abutment area.

Typically, the level probe also has one end intended to be outside the boiler when the control device is fastened to the boiler wall.

According to one aspect, in accordance with claim 10, the invention also provides an electric dispenser for hot drinks comprising such a control device.

The device of the invention advantageously provides a perfect hermetic sealing, preventing the leakage of water, liquid or vapor, from the boiler. In particular, when the liquid in the boiler is heated, the resulting pressure increase within the boiler pushes the insulator outwards, therefore it gets stuck with more strength into the fastening element, thus compressing the sealing ring which cannot go beyond the abutment area. Therefore, as the inner pressure of the boiler increases also the sealing increases, contrarily to the prior art. The fact that no further fastening elements are required to retain the insulator to the fastening element is also advantageous. In particular, elements capable of determining the plastic deformation of the insulator, e.g. threaded elements which require a precise tightening force to avoid the risk of damaging the insulator material, are not required. The device is able to work perfectly, without deteriorating, even at high temperatures, above 100°C. Manufacturing the device of the invention is also very simple and cost-effective.

The dependent claims describe preferred embodiments of the invention.

### Brief description of the drawings

Further features and advantages of the invention will become more apparent in light of the detailed description of preferred, but not exclusive, embodiments of a water level control device in a boiler. The description is provided by way of example and not of limitation, with reference to the accompanying drawings, also provided by way of example and not of limitation, in which:
Figure 1 shows a sectional view with some separate parts of the device of the invention;
Figure 2 shows a sectional view of the device of the invention;
Figure 3 shows a plan view of one side of the device in Figure 2;
Figure 4 shows a view of one side of a component of the device in Figure 2;
Figure 5 shows a view of another side of the component in Figure 2.

The same reference numerals in the figures identify the same elements or components.

### Detailed description of a preferred embodiment of the invention

With reference to the figures, a control device 1 is shown for controlling the water level in a boiler (not shown since boilers are well known in the art). The control device 1 comprises
- a fastening element 2 apt to fasten the control device 1 to a boiler wall, with a through hole defining an axis X,
- an insulator 3 inserted into the hole of the fastening element 2,
- a sealing ring 4,
- a level probe 5 having a portion coated by the insulator 3 and one end 6 intended to be within the boiler when the control device 1 is fastened to the boiler wall,
wherein there is provided a first abutment area 8 which is circumferential and internal to the fastening element 2,
wherein the insulator 3 has a circumferential groove 7 where the sealing ring 4 is accommodated, and
wherein the sealing ring 4 abuts against said first abutment area 8.

Preferably, the level probe 5 and the insulator 3 have a longitudinal axis coincident with axis X. The through hole is delimited by an inner wall 9, shaped so as to form the circumferential abutment area 8, or shoulder, for the sealing ring, which is preferably an elastomeric o-ring 4. Therefore, the abutment area 8 is internal to the fastening element 2. In particular, the wall 9 of the fastening element comprises a first area 10 with a first inner diameter, a second area 11 with a second inner diameter smaller than the first inner diameter, and a third area 12 for the junction between the first area 10 and the second area 11. The third area 12 is tapered towards the second area 11 so as to define the abutment area 8. Moreover, the fastening element 2 comprises an externally threaded portion 13 apt to be screwed to a boiler wall, in particular to a threaded opening of the boiler wall. Preferably, the abutment area 8 is inside the threaded portion 13. Preferably, the extension along the axis X of the threaded portion 13 is approximately equal to the extension along the axis X of the thickness of the boiler wall where the opening is provided. The fastening element 2 also comprises a head 14, adjacent and coaxial to the threaded portion 13, which is a part apt to abut against the outer face of the boiler wall when the threaded portion 13 is screwed into the boiler wall opening. In particular, the extension in the direction perpendicular to the axis X of head 14 is greater than the outer diameter of the threaded portion 13. In order to favor the screwing of the fastening element 2, head 14 is shaped so as to be maneuvered with a common tightening tool. For example, in this embodiment, head 14 has a hexagonal profile. Preferably, in the face of head 14 directed towards the boiler wall when the fastening element 2 is screwed to the boiler, an annular groove 15 is provided where a gasket can be accommodated, e.g., another sealing ring or an o-ring (not shown). The fastening element 2 is preferably made of stainless steel. Preferably, but not exclusively, the fastening element 2 is the only element by means of which the control device 1 is fastened to the boiler.

Insulator 3, being substantially cylindrical in shape, is mainly needed to provide an electrical insulation between the level probe 5 and the boiler, in particular between the level probe 5 and the fastening element 2. To this end, insulator 3 is preferably made of plastic resistant to high temperatures, at least to 100°C. An example of suitable material for the construction of the insulator is polytetrafluoroethylene (PTFE).

Insulator 3 comprises a first portion 16 with a first outer diameter, a second portion 17 with a second outer diameter smaller than the first outer diameter, and a third junction portion between the first portion and the second portion, with a third outer diameter which is smaller than the second outer diameter. Thereby, the third portion forms the circumferential groove 7 where the o-ring 4 is accommodated. When insulator 3 is inserted into the fastening element 2, it passes through the latter and the boiler wall, and has a portion internal to the boiler and a portion which remains external to the boiler.

Typically, the outer diameter of the portion 17 of insulator 3 is smaller than the inner diameter of the area 11 of the fastening element 2, and the outer diameter of the portion 16 of insulator 3 is smaller than the inner diameter of the area 10 of the fastening element 2, and preferably greater than the inner diameter of the area 11 of the fastening element 2.

The portion of insulator 3 which is external to the boiler has one end 18, or an end area, which is outside the fastening element 2. A locking element 19 is preferably fastened to end 18 to provide a restraint, in addition to the wedging of the o-ring 4 in the abutment area 8, between the insulator 3 and the fastening element 2. The locking element 19 is apt to abut against the fastening element 2, so that, also considering the wedging of the o-ring 4, insulator 3 cannot move along axis X. in particular, the locking element 19 abuts against an abutment area 22 external to the boiler when the fastening element 2 is fastened to the boiler. In this embodiment, the locking element 19 abuts against an abutment area 22 of the fastening element 2 which is an outer surface, in particular against the face 22 of head 14 which is distal from the boiler. Furthermore, the locking element is elastic, preferably is an elastic clip, which gets stuck into two recesses 20 obtained into the end 18 of insulator 3. Alternatively, a single circular recess is provided. The locking element can also be of another type, without the need to include the recesses. For example, a Starlock®-type washer can be used. Insulator 3 is preferably fastened to the fastening element 2 only by means of the wedging of the o-ring 4 and possibly also by means of the locking element 19.

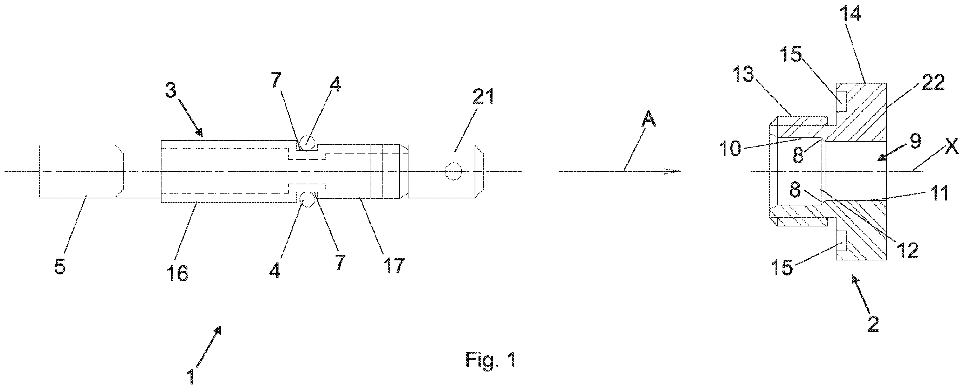

The level probe 5 is fastened to insulator 3 and has a portion surrounded, or coated, by the latter. In particular, such a portion is immersed into the insulator and the longitudinal axis thereof is coincident to the axis X when the control device 1 is fastened to the boiler. Preferably, the insulator 3 and the level probe 5 are co-molded. The level probe 5 passes through insulator 3, and therefore through the fastening element 2 and the boiler wall, and has one end 6, or end portion, internal to the boiler and one end 21 external to the boiler. The end 6 is apt to detect the presence of water in the boiler, and is preferably bent into a hook as described below. Furthermore, it is preferable that the level probe 5 is at least partially flattened, i.e. it has a much smaller size than the other two. The end 21 of the level probe 5 protrudes, along axis X, beyond the end 18 of insulator 3. Such an end 21 of the level probe 5 is preferably shaped to be connected to a connector, e.g. of the Faston type, so as to be connected to another device (not shown), e.g. an electronic control unit, a solenoid valve, a pump, and the like. Preferably, the level probe 5 has a profile similar to that of insulator 3, comprising three portions arranged at the respective three portions of insulator 3, as shown for example in Figure 1, where the portion of the level probe 5 surrounded by insulator 3 is drawn with a dashed line. Typically, the level probe is made of a material which is suitable for conducting electricity. For example, a suitable material for manufacturing the level probe is stainless steel.

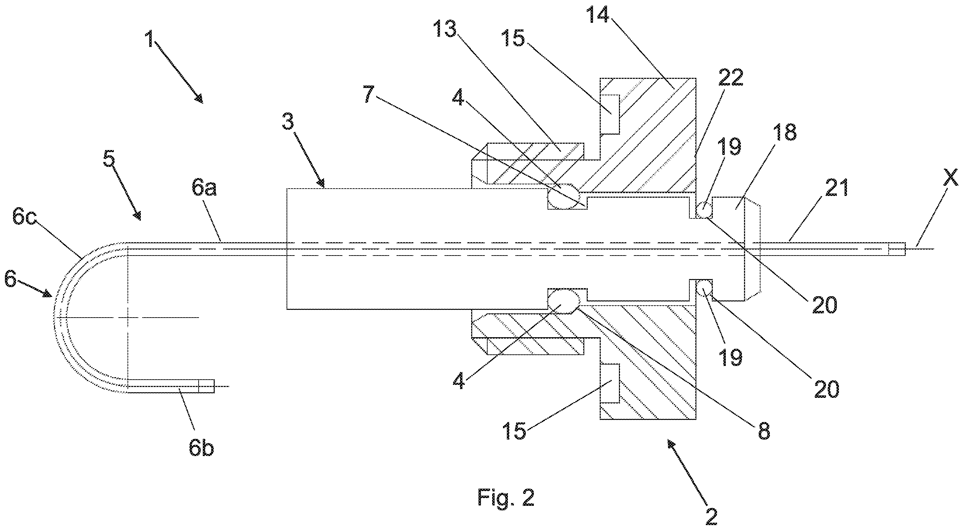

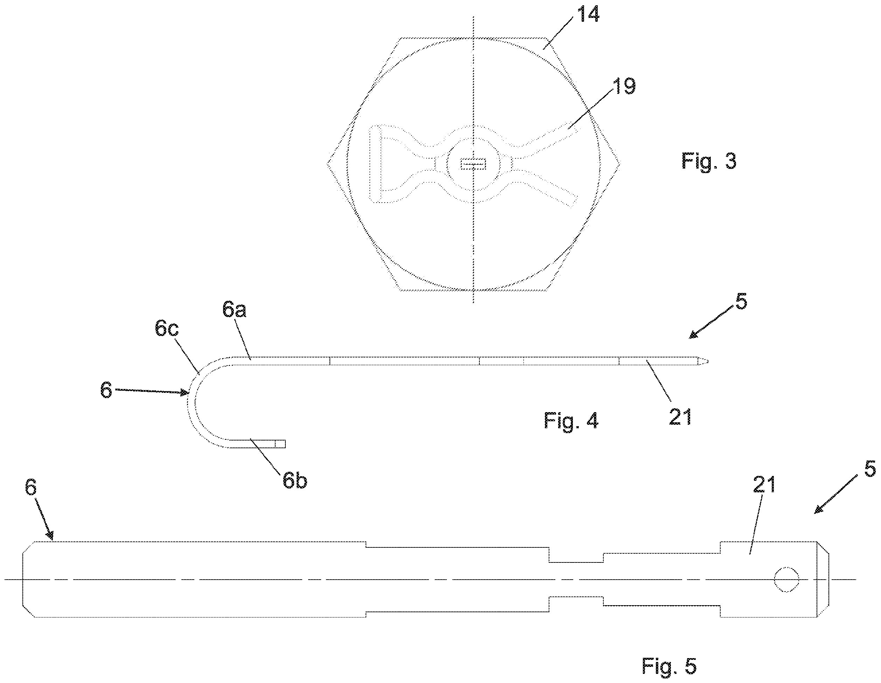

Preferably, as shown in Figures 2, 4 and 5, the level probe 5 is a substantially flat metal element, with the end 6 preferably folded at approximately 180°. In particular, the end 6, or end portion, of the level probe 5 comprises a first straight segment 6a having a rectilinear longitudinal axis, substantially coincident with axis X. The end 6 also comprises a second straight segment 6b having a rectilinear longitudinal axis, parallel to and distinct from the longitudinal axis of the first segment 6a. In other words, the first straight segment 6a and the second straight segment 6b are substantially parallel to each other.

The first straight segment 6a and the second straight segment 6b are connected by a third segment 6c which is curvilinear.

This configuration of the level probe is particularly advantageous since it increases the exchange, or contact, surface with the water and reduces the thickness of accumulated limestone. For example, if the exchange surface triples, the thickness of accumulated limestone will be three times lower, so that the level probe preserves its sensitivity for a longer time.

In an alternative not shown, the level probe 5 is bent so that the first straight segment 6a and the second straight segment 6b, joined by a curved segment 6c, are not parallel but inclined with respect to each other with an angle from 0 to 180°, extremes excluded. A further alternative provides for the level probe not being bent, but substantially flat, and therefore the segments indicated by the reference numerals 6a, 6b and 6c are straight and aligned to one another.

As shown in Figure 1, the assembly comprising insulator 3, level probe 5 and o-ring 4 is insertable into the through hole of the fastening element 2 in the direction of the arrow indicated by the reference sign A.

The invention also includes an electric dispenser of hot drinks, in particular an electric coffee machine, comprising a control device according to the invention.

After providing an explanatory description of the control device 1, those skilled in the art can appreciate the advantages thereof. The device of the invention provides a perfect hermetic sealing, preventing the leakage of water, liquid or vapor, from the boiler. In particular, when the liquid in the boiler is heated, the resulting pressure increase within the boiler pushes the insulator outwards, whereby it gets stuck with more strength into the fastening element 2, thus pushing on the o-ring 4 which cannot go beyond the abutment area 8. Therefore, as the inner pressure of the boiler increases also the seal increases. The fact that, in addition to the possible locking element 19, no further fastening elements are required to retain the insulator to the fastening element 2 is also advantageous. In particular, elements which can determine the plastic deformation of insulator 3, e.g. threaded elements, are not required. The device is capable of working perfectly, without deteriorating, even at high temperatures, above 100°C. The manufacturing of the device of the invention is also very simple and cost-effective.

## Claims

1. A control device (1) for controlling a water level in a boiler, comprising
- a fastening element (2) apt to fasten the control device (1) to a boiler wall, with a through hole defining an axis (X),
- an insulator (3) inserted into the hole of the fastening element (2),
- a level probe (5) having a portion coated by the insulator (3) and one end (6) destined to be within the boiler when the control device (1) is fastened to the boiler wall,
wherein there is provided a first abutment area (8) which is circumferential and internal to the fastening element (2),
**characterized in that** it comprises a sealing ring (4)
**in that** the insulator (3) has a circumferential groove (7) where the sealing ring (4) is accommodated, and
**in that** the sealing ring (4) abuts against said first abutment area (8).

2. A control device (1) according to claim 1, comprising a locking element (19) restrainable to one end (18) of the insulator (3) and apt to abut against a second abutment area (22) provided on the fastening element (2),
wherein said end (18) of the insulator (3) and said second abutment area (22) are external to the boiler when the control device (1) is fastened to the boiler.

3. A control device (1) according to claim 1 or 2, wherein the insulator (3) comprises a first portion (16) with a first outer diameter, a second portion (17) with a second outer diameter smaller than the first outer diameter, and a third portion of junction between the first portion (16) and the second portion (17), with a third outer diameter which is smaller than the second outer diameter,
whereby the third portion forms the circumferential groove (7) where the sealing ring (4) is accommodated.

4. A control device (1) according to any one of the preceding claims, wherein said through hole is delimited by an inner wall (9) of the fastening element (2), wherein the inner wall (9) is shaped so as to form said first abutment area (8),
and wherein the insulator (3) is inserted into said through hole.

5. A control device (1) according to claim 4, wherein said inner wall (9) comprises a first area (10) with a first inner diameter, a second area (11) with a second inner diameter smaller than the first inner diameter, so as to form said first abutment area (8).

6. A control device (1) according to claim 5, wherein said wall (9) of the fastening element (2) comprises a third area (12) of junction between the first area (10) and the second area (11), wherein the third area (12) is tapered towards the second area (11) so as to define said first abutment area (8).

7. A control device according to any one of the preceding claims, wherein the fastening element (2) comprises an externally threaded portion (13) apt to be screwed to a boiler wall.

8. A control device (1) according to any one of the preceding claims, wherein the insulator (3) is made of plastic.

9. A control device (1) according to any one of the preceding claims, wherein the end (6) comprises a first straight segment (6a), a second straight segment (6b) parallel to the first straight segment (6a), and a curved segment (6c) which connects the first straight segment (6a) and the second straight segment (6b).

10. An electric dispenser of hot drinks, comprising a control device according to any one of the preceding claims.

## Patentansprüche

1. Steuervorrichtung (1) zum Steuern eines Wasserstandes in einem Kessel, aufweisend:
- ein Befestigungselement (2), geeignet um die Steuervorrichtung (1) mittels eines Durchgangsloches, das eine Achse (X) definiert, an der Kesselwand zu befestigen,
- einen Isolator (3), der in das Loch des Befestigungselements (2) eingesetzt ist,
- eine Höhenstandssonde (5) mit einem Abschnitt, der von dem Isolator (3) überzogen ist und mit einem Ende (6), das bestimmt ist, innerhalb des Kessels angeordnet zu sein, wenn die Steuervorrichtung (1) an der Kesselwand befestigt ist,
wobei ein erster Stützbereich (8) umlaufend und innerhalb des Befestigungselements (2), vorgesehen ist
**dadurch gekennzeichnet, dass**
es einen Dichtring (4) aufweist und
der Isolator (3) eine umlaufende Nut (7) aufweist, in der der Dichtring (4) aufgenommen ist, und
dass sich der Dichtring (4) gegenüber dem ersten Stützbereich (8) abstützt.

2. Steuervorrichtung (1) gemäß Anspruch 1, aufweisend ein Sicherungselement (19), das an ein Ende (18) des Isolators (3) klemmbar ist, und geeignet ist, sich gegenüber einem zweiten Stützbereich (22), der an dem Befestigungselement (2) vorgesehen ist, abzustützen,
wobei dieses Ende (18) des Isolators (3) und der zweite Stützbereich (22) außerhalb des Kessels liegen, wenn die Steuervorrichtung (1) an dem Kessel befestigt ist.

3. Steuervorrichtung (1) gemäß Anspruch 1 oder 2, wobei der Isolator (3) einen ersten Bereich (16) mit einem ersten Außendurchmesser, einen zweiten Bereich (17) mit einem zweiten Außendurchmesser kleiner als der erste Außendurchmesser und einen dritten Bereich des Übergangs zwischen dem ersten Bereich (16) und dem zweiten Bereich (17) mit einem dritten Außendurchmesser aufweist, der kleiner ist als der zweite Außendurchmesser,
wobei der dritte Bereich die umlaufende Nut (7) bildet, in der der Dichtring (4) aufgenommen ist.

4. Steuervorrichtung (1) gemäß einem der vorigen Ansprüche, wobei das Durchgangsloch durch eine Innenwand (9) des Befestigungselements (2) begrenzt ist, wobei die Innenwand (9) derart geformt ist, dass sie den ersten Stützbereich (8) bildet, und wobei der Isolator (3) in das Durchgangsloch eingesetzt wird.

5. Steuervorrichtung (1) gemäß Anspruch 4, wobei die Innenwand (9) einen ersten Bereich (10) mit einem ersten Innendurchmesser und einen zweiten Bereich (11) mit einem zweiten Innendurchmesser kleiner als der erste Innendurchmesser aufweist, so dass sie den ersten Stützbereich (8) bildet.

6. Steuervorrichtung (1) gemäß Anspruch 5, wobei die Wand (9) des Befestigungselements (2) einen dritten Übergangsbereich (12) zwischen dem ersten Bereich (10) und dem zweiten Bereich (11) aufweist, wobei sich der dritte Bereich (12) zum zweiten Bereich (11) hin derart verjüngt, um den ersten Stützbereich (8) zu definieren.

7. Steuervorrichtung gemäß einem der vorigen Ansprüche, wobei das Befestigungselement (2) einen Bereich mit einem Außengewinde (13) aufweist, das geeignet ist, in eine Kesselwand geschraubt zu werden.

8. Steuervorrichtung (1) gemäß einem der vorigen Ansprüche, wobei der Isolator (3) aus Plastik hergestellt ist.

9. Steuervorrichtung (1) gemäß einem der vorigen Ansprüche, wobei das Ende (6) ein erstes gerades Segment (6a), ein zum ersten geraden Segment (6a) paralleles, zweites gerades Segment (6b) und ein gekrümmtes Segment (6c) aufweist, das das erste gerade Segment (6a) und das zweite gerade Segment (6b) verbindet.

10. Elektrischer Spender für heiße Getränke, aufweisend eine Steuervorrichtung gemäß einem der vorigen Ansprüche.

## Revendications

1. Un dispositif de commande (1) pour commander un niveau d'eau dans une chaudière, comprenant
- un élément de fixation (2) apte à fixer le dispositif de commande (1) à une paroi de chaudière, avec un trou traversant définissant un axe (X),
- un isolant (3) inséré dans le trou de l'élément de fixation (2),
- une sonde de niveau (5) ayant une partie revêtue par l'isolant (3) et une extrémité (6) destinée à être à l'intérieur de la chaudière lorsque le dispositif de commande (1) est fixé à la paroi de chaudière,
dans lequel il est prévu une première zone de butée (8) qui est circonférentielle et interne à l'élément de fixation (2),
**caractérisé en ce qu'**il comprend une bague d'étanchéité (4) **en ce que** l'isolant (3) a une rainure circonférentielle (7) où la bague d'étanchéité (4) est logée, et
**en ce que** la bague d'étanchéité (4) vient en butée contre ladite première zone de butée (8).

2. Un dispositif de commande (1) selon la revendication 1, comprenant un élément de verrouillage (19) apte à être retenu sur une extrémité (18) de l'isolant (3) et apte à venir en butée contre une deuxième zone de butée (22) disposée sur l'élément de fixation (2),
dans lequel ladite extrémité (18) de l'isolant (3) et ladite deuxième zone de butée (22) sont externes à la chaudière lorsque le dispositif de commande (1) est fixé à la chaudière.

3. Un dispositif de commande (1) selon la revendication 1 ou la revendication 2, dans lequel l'isolant (3) comprend une première partie (16) ayant un premier diamètre externe, une deuxième partie (17) ayant un deuxième diamètre externe plus petit que le premier diamètre externe, et une troisième partie de jonction entre la première partie (16) et la deuxième partie (17), avec un troisième diamètre externe qui est plus petit que le deuxième diamètre externe, grâce à quoi la troisième partie forme la rainure circonférentielle (7) où est logée la bague d'étanchéité (4).

4. Un dispositif de commande (1) selon l'une quelconque des revendications précédentes, dans lequel ledit trou traversant est délimité par une paroi interne (9) de l'élément de fixation (2), dans lequel la paroi interne (9) est profilée de façon à former ladite première zone de butée (8), et dans lequel l'isolant (3) est inséré dans ledit trou traversant.

5. Un dispositif de commande (1) selon la revendication 4, dans lequel ladite paroi interne (9) comprend une première zone (10) ayant un premier diamètre interne, une deuxième zone (11) ayant un deuxième diamètre interne plus petit que le premier diamètre interne, de façon à former ladite première zone de butée (8).

6. Un dispositif de commande (1) selon la revendication 5, dans lequel ladite paroi (9) de l'élément de fixation (2) comprend une troisième zone (12) de jonction entre la première zone (10) et la deuxième zone (11), dans lequel la troisième zone (12) est effilée vers la deuxième zone (11) de façon à définir ladite première zone de butée (8).

7. Un dispositif de commande selon l'une quelconque des revendications précédentes, dans lequel l'élément de fixation (2) comprend une partie à filetage externe (13) apte à être vissée à une paroi de chaudière.

8. Un dispositif de commande (1) selon l'une quelconque des revendications précédentes, dans lequel l'isolant (3) est en plastique.

9. Un dispositif de commande (1) selon l'une quelconque des revendications précédentes, dans lequel l'extrémité (6) comprenant un premier segment droit (6a), un deuxième segment droit (6b) parallèle au premier segment droit (6a), et un segment incurvé (6c) qui relie le premier segment droit (6a) et le deuxième segment droit (6b).

10. Un distributeur électrique de boissons chaudes, comprenant un dispositif de commande selon l'une quelconque des revendications précédentes.
